# EUROPEAN PATENT SPECIFICATION

(11) **EP 4 546 023 B1**
(45) Date of publication and mention of the grant of the patent: **30.09.2026**
(21) Application number: 24192854.8
(22) Date of filing: 05.08.2024
(51) Int. Cl.: G02B 7/02

(54) **LENS MODULE**
LINSENMODUL
MODULE DE LENTILLE

(30) Priority: 27.10.2023 KR 20230145905
(43) Date of publication of application: 30.04.2025
(73) Proprietor: Samsung Electro-Mechanics Co., Ltd., Gyeonggi-do (KR)
(72) Inventor: Choi, Young An, Suwon-si, Gyeonggi-do (KR)
(74) Representative: Grünecker Patent- und Rechtsanwälte PartG mbB

(56) References cited:
- CN-A- 111 756 958
- CN-A- 115 997 387
- KR-A- 20220 133 555
- US-A1- 2020 116 973

## Description

### CROSS-REFERENCE TO RELATED APPLICATIONS

This application claims the benefit of priority to Korean Patent Application No. 10-2023-0145905, filed on October 27, 2023**.**

### BACKGROUND

### 1. Field

The following description relates to a lens module.

### 2. Description of Related Art

As the performance of portable devices (e.g., portable phones) improves, high resolution is desired in small camera modules mounted in portable devices. Accordingly, the small camera module may be composed of a lens module that contains a large number of lenses.

The lens module including a plurality of lenses may include a lens and a lens barrel that accommodates the lens. This lens module has a structure that aligns the optical axes of the lenses through sequential insertion thereof into the lens barrel. Additionally, gap maintaining portions may be disposed between the lenses, and the gap maintaining portions may be sequentially inserted into the lens barrel and assembled in the same manner as the lenses.

The lens includes a flange portion that may be used to bond the lens to the lens barrel. However, there are examples in which light may enter the flange portion and cause unexpected flares. Accordingly, a structure of the lens and the gap maintaining portion that reduces flares occurring within the lens module and facilitates the assembly of the lens module is desired.
US 2020/116973 A1 relates to an imaging lens assembly that includes a plastic barrel, a lens set and a metal retainer. The metal retainer is for fixedly disposing the lens set in the plastic barrel and includes an inner annular portion, a plurality of fixing portions and a plurality of elastic portions. The inner annular portion forms a through hole. The fixing portions directly contact the plastic barrel for the metal retainer to be fixedly disposed in the plastic barrel. At least one of the elastic portions connects the inner annular portion and at least one of the fixing portions.

### SUMMARY

It is the object of the present invention to improve prior art systems. This object is solved by the subject matter of the independent claims. Preferred embodiments are defined by the dependent claims.

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

In a general aspect, a lens module includes a lens barrel; a lens disposed within the lens barrel; and a gap maintaining portion disposed within the lens barrel, and further disposed between a side surface of the lens and an inner peripheral surface of the lens barrel, wherein a protruding portion, that protrudes toward the inner peripheral surface of the lens barrel, is disposed on the side surface of the lens, and wherein a groove in which the protruding portion is disposed is formed in the gap maintaining portion.

The groove may have a shape that corresponds to a shape of the protruding portion.

The gap maintaining portion may include a first gap maintaining portion; and a second gap maintaining portion disposed above the first gap maintaining portion, wherein the groove may be disposed between the first gap maintaining portion and the second gap maintaining portion.

The protruding portion may include an inclined surface of which a distance from an optical axis increases from an object side to an image side.

The protruding portion may include a first inclined surface of which a distance from an optical axis increases from an object side to an image side; and a second inclined surface of which a distance from the optical axis decreases from the object side to the image side, wherein the first inclined surface and the second inclined surface may be connected on a side extending from the optical axis.

A width of a cross-section of the protruding portion parallel to an optical axis may narrow as a distance from the optical axis increases.

The protruding portion may include a first inclined surface in contact with the first gap maintaining portion; and a second inclined surface in contact with the second gap maintaining portion, wherein the first inclined surface and the second inclined surface may be connected to each other.

The protruding portion may include a first protruding portion that extends directly from the side surface of the lens; and a second protruding portion that extends directly from the first protruding portion, wherein a cross-section of the second protruding portion may have a width parallel to an optical axis which narrows as a distance from the optical axis increases.

The second protruding portion may include a first inclined surface in contact with the first gap maintaining portion; and a second inclined surface in contact with the second gap maintaining portion, wherein the first inclined surface and the second inclined surface may be connected to each other.

The protruding portion may be formed with a recessed groove that is formed to be concave from an object side to an image side, and the first gap maintaining portion may include a step portion disposed in the recessed groove.

The protruding portion may include a first recessed groove that is formed to be concave from an object side to an image side, and a second recessed groove that is formed to be concave from the image side to the object side, wherein the first gap maintaining portion may include a first step portion disposed in the first recessed groove; and a second step portion disposed in the second recessed groove.

The first recessed groove and the second recessed groove may be disposed symmetrically with respect to a line perpendicular to an optical axis.

The protruding portion may include a first protruding portion that extends directly from the side surface of the lens; and a second protruding portion that extends directly from the first protruding portion, wherein a cross-section of the first protruding portion may have a width, parallel to an optical axis, that narrows as a distance from the optical axis increases.

In a general aspect, a lens module includes a lens barrel; a lens disposed within the lens barrel; a first gap maintaining portion and a second gap maintaining portion disposed within the lens barrel and stacked in an optical axis direction, wherein a side surface of the lens is in contact with an inner surface of the first gap maintaining portion and an inner surface of the second gap maintaining portion.

The lens may include an optical portion and a flange portion disposed at an edge of the optical portion, wherein the first gap maintaining portion may include a first step portion that protrudes in a direction perpendicular to the optical axis direction from inside of the first gap maintaining portion, and wherein the flange portion and the first step portion may overlap in the optical axis direction.

The flange portion and the first step portion may be disposed to be in contact with each other.

The second gap maintaining portion may include a second step portion that protrudes from inside of the second gap maintaining portion in a direction perpendicular to the optical axis direction, and wherein the second step portion may overlap the lens in the optical axis direction.

A seating groove formed to be concave in the optical axis direction may be disposed on an upper surface of the first gap maintaining portion, and the second gap maintaining portion may include a protruding portion disposed in the seating groove.

A width of the seating groove may narrow from an image side to an object side, and the protruding portion may have a shape that corresponds to a shape of the seating groove.

Other features and aspects will be apparent from the following detailed description, the drawings, and the claims.

### BRIEF DESCRIPTION OF DRAWINGS

FIG. 1 is an exploded perspective view illustrating an example a lens module, in accordance with one or more embodiments.
FIG. 2 is a cross-sectional view illustrating an example lens module, in accordance with one or more embodiments.
FIG. 3 is a diagram illustrating portion A of FIG. 2 according to a first embodiment.
FIG. 4 is a diagram illustrating portion A of FIG. 2 according to a second embodiment.
FIG. 5 is a diagram illustrating portion A of FIG. 2 according to a third embodiment.
FIG. 6 illustrates FIG. 5 excluding the gap maintaining portion.
FIG. 7 illustrates FIG. 5 excluding the lens.
FIG. 8 illustrates portion A of FIG. 2 according to a fourth embodiment.
FIG. 9 illustrates FIG. 8 excluding the gap maintaining portion.
FIG. 10 illustrates FIG. 8 excluding the lens.
FIG. 11 illustrates portion A of FIG. 2 according to a fifth embodiment.
FIG. 12 illustrates FIG. 11 excluding the gap maintaining portion.
FIG. 13 illustrates FIG. 11 excluding the lens.
FIG. 14 illustrates portion A of FIG. 2 according to a sixth embodiment.

Throughout the drawings and the detailed description, unless otherwise described, the same reference numerals refer to the same elements. The drawings may not be to scale, and the relative size, proportions, and depiction of elements in the drawings may be exaggerated for clarity, illustration, and convenience.

### DETAILED DESCRIPTION

The following detailed description is provided to assist the reader in gaining a comprehensive understanding of the methods, apparatuses, and/or systems described herein. However, various changes, modifications, and equivalents of the methods, apparatuses, and/or systems described herein will be apparent after an understanding of the disclosure of this application. For example, the sequences within and/or of operations described herein are merely examples, and are not limited to those set forth herein, but may be changed as will be apparent after an understanding of the disclosure of this application, except for sequences within and/or of operations necessarily occurring in a certain order. As another example, the sequences of and/or within operations may be performed in parallel, except for at least a portion of sequences of and/or within operations necessarily occurring in an order, e.g., a certain order. Also, descriptions of features that are known after an understanding of the disclosure of this application may be omitted for increased clarity and conciseness.

Although terms such as "first," "second," and "third", or A, B, (a), (b), and the like may be used herein to describe various members, components, regions, layers, or sections, these members, components, regions, layers, or sections are not to be limited by these terms. Each of these terminologies is not used to define an essence, order, or sequence of corresponding members, components, regions, layers, or sections, for example, but used merely to distinguish the corresponding members, components, regions, layers, or sections from other members, components, regions, layers, or sections. Thus, a first member, component, region, layer, or section referred to in the examples described herein may also be referred to as a second member, component, region, layer, or section without departing from the teachings of the examples.

Throughout the specification, when a component or element is described as "on," "connected to," "coupled to," or "joined to" another component, element, or layer, it may be directly (e.g., in contact with the other component, element, or layer) "on," "connected to," "coupled to," or "joined to" the other component element, or layer, or there may reasonably be one or more other components elements, or layers intervening therebetween. When a component or element is described as "directly on", "directly connected to," "directly coupled to," or "directly joined to" another component element, or layer, there can be no other components, elements, or layers intervening therebetween. Likewise, expressions, for example, "between" and "immediately between" and "adjacent to" and "immediately adjacent to" may also be construed as described in the foregoing.

The terminology used herein is for describing various examples only and is not to be used to limit the disclosure. The articles "a," "an," and "the" are intended to include the plural forms as well, unless the context clearly indicates otherwise. As non-limiting examples, terms "comprise" or "comprises," "include" or "includes," and "have" or "has" specify the presence of stated features, numbers, operations, members, elements, and/or combinations thereof, but do not preclude the presence or addition of one or more other features, numbers, operations, members, elements, and/or combinations thereof, or the alternate presence of an alternative stated features, numbers, operations, members, elements, and/or combinations thereof. Additionally, while one embodiment may set forth such terms "comprise" or "comprises," "include" or "includes," and "have" or "has" specify the presence of stated features, numbers, operations, members, elements, and/or combinations thereof, other embodiments may exist where one or more of the stated features, numbers, operations, members, elements, and/or combinations thereof are not present.

As used herein, the term "and/or" includes any one and any combination of any two or more of the associated listed items. The phrases "at least one of A, B, and C", "at least one of A, B, or C", and the like are intended to have disjunctive meanings, and these phrases "at least one of A, B, and C", "at least one of A, B, or C", and the like also include examples where there may be one or more of each of A, B, and/or C (e.g., any combination of one or more of each of A, B, and C), unless the corresponding description and embodiment necessitates such listings (e.g., "at least one of A, B, and C") to be interpreted to have a conjunctive meaning.

The features described herein may be embodied in different forms, and are not to be construed as being limited to the examples described herein. Rather, the examples described herein have been provided merely to illustrate some of the many possible ways of implementing the methods, apparatuses, and/or systems described herein that will be apparent after an understanding of the disclosure of this application. The use of the term "may" herein with respect to an example or embodiment (e.g., as to what an example or embodiment may include or implement) means that at least one example or embodiment exists where such a feature is included or implemented, while all examples are not limited thereto. The use of the terms "example" or "embodiment" herein have a same meaning (e.g., the phrasing "in one example" has a same meaning as "in one embodiment", and "one or more examples" has a same meaning as "in one or more embodiments").

One or more examples may provide a lens module that reduces flares and minimizes tolerances due to assembly.

For explanation purposes, with respect to an optical axis, a direction perpendicular to the optical axis may be referred to as outside, and with respect to the optical axis, a direction which is closer to the direction perpendicular to the optical axis may be referred to as inside. Additionally, based on the drawing shown for explanation purposes, upper and lower portions can be distinguished and explained.

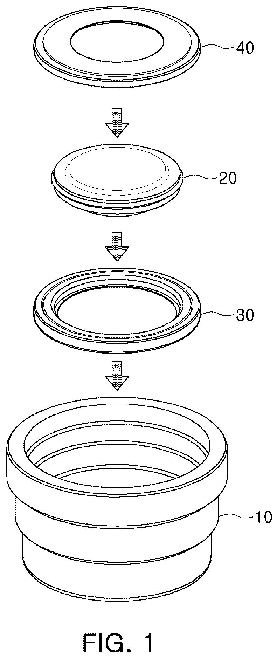

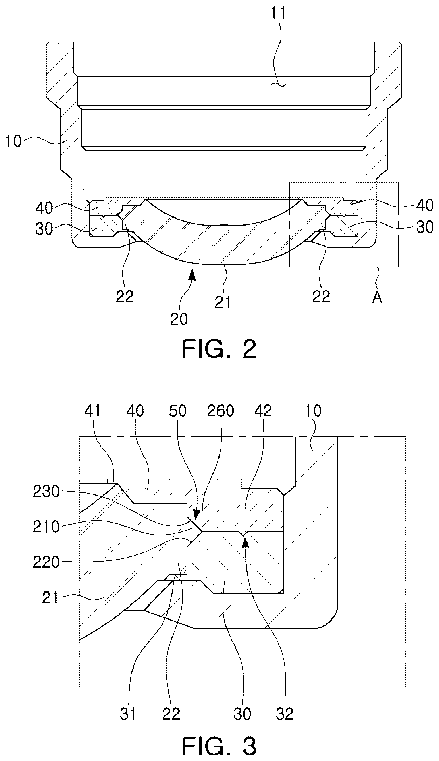

FIG. 1 is an exploded perspective view for illustrating an example lens module, in accordance with one or more embodiments, FIG. 2 is a cross-sectional view for illustrating an example lens module, in accordance with one or more embodiments, and FIG. 3 is a diagram illustrating portion A of FIG. 2 according to a first embodiment.

Referring to FIGS. 1 and 2, a lower portion is an object side, and an upper portion is an image side.

The example lens module may include a lens barrel 10, a lens 20, and gap maintaining portions 30 and 40.

Referring to FIGS. 1 and 2, one lens and two gap maintaining portions are illustrated. However, this is for illustrative purposes only. Accordingly, the lens module may include a plurality of lenses, and may include a plurality of gap maintaining portions disposed between the plurality of lenses.

The lens barrel 10 may include a hollow portion 11. A plurality of lenses may be disposed in the hollow portion 11 of the lens barrel 10. The plurality of lenses may be stacked and disposed in the hollow portion 11 of the lens barrel 10 in an optical axis direction. A gap maintaining portion (30 or 40) may be disposed in the hollow portion 11 of the lens barrel 10. The gap maintaining portion (30 or 40) may be disposed between the plurality of lenses, and the number thereof may vary depending on the implementation. The plurality of gap maintaining portions (30 or 40) may also be stacked and disposed in the optical axis direction, and a lens 20 may be disposed between the plurality of gap maintaining portions (30 or 40).

The lens 20 may be formed of glass, glass molding, a thermosetting resin, a thermoplastic resin, or plastic, as only examples. The lens 20 may have positive or negative refractive power. The lens 20 may be disposed within the lens barrel 10.

The lens 20 may include an optical portion 21 and a flange portion 22. The optical portion 21 may be a region substantially refracting incident light reflected from a subject. The optical portion 21 may have a concave, convex, or meniscus shape.

The flange portion 22 may be formed at an edge of the optical portion 21. In the one or more examples, the flange portion 22 may contact the gap maintaining portions 30 and 40. A protruding portion 210 may be disposed on a side surface of the flange portion 22. The gap maintaining portions 30 and 40 may be disposed between the side surface of the flange portion 22 and an inner peripheral surface of the lens barrel 10. That is, the side surface of the flange portion 22 may be spaced apart from the inner peripheral surface of the lens barrel 10 by the gap maintaining portions 30 and 40.

The gap maintaining portions 30 and 40 may be formed of an opaque material. In an example, the surfaces of the gap maintaining portions 30 and 40 may be coated with an opaque material. That is, the gap maintaining portions 30 and 40 may be formed of a material that does not allow light to pass therethrough. Since the gap maintaining portions 30 and 40 may be formed of a material that does not allow light to pass therethrough, flares that may occur as light passes through the gap maintaining portions 30 and 40 can be prevented.

The gap maintaining portions 30 and 40 may be disposed within the lens barrel 10. The gap maintaining portions 30 and 40 may be disposed in the hollow portion 11 of the lens barrel 10. The gap maintaining portions 30 and 40 may be formed of a ring-shaped member. That is, the gap maintaining portions 30 and 40 may also include a hollow portion, and light may be incident through the hollow portion of the gap maintaining portions 30 and 40.

The gap maintaining portions 30 and 40 may separate the lens 20 from the lens barrel 10. That is, at least a portion of the gap maintaining portions 30 and 40 may be disposed between the lens 20 and the inner peripheral surface of the lens barrel 10. Specifically, at least a portion of the gap maintaining portions 30 and 40 may be disposed between the side surface of the flange portion 22 and the inner peripheral surface of the lens barrel 10 to separate the lens 20 from the lens barrel 10. The inner surfaces of the gap maintaining portions 30 and 40 may be disposed to be in contact with the side surface of the lens 20.

The gap maintaining portions 30 and 40 may include a first gap maintaining portion 30 and a second gap maintaining portion 40.

Referring to FIG. 2, in an example, the first gap maintaining portion 30 may be disposed in the lower portion of the lens barrel 10, and the second gap maintaining portion 40 may be disposed in the upper portion of the lens barrel 10. The first gap maintaining portion 30 and the second gap maintaining portion 40 may be stacked in an optical axis direction within the lens barrel 10. The inner surface of the first gap maintaining portion 30 may contact a side surface of the lens 20, and the inner surface of the second gap maintaining portion 40 may also contact the side surface of the lens 20.

The gap maintaining portions 30 and 40 may have a thickness. In an example, the thickness may refer to a length measured in an optical axis direction. The individual thickness of the first gap maintaining portion 30 or the second gap maintaining portion 40 may be thinner than a thickness of the flange portion 22. However, the sum of the thicknesses of the first gap maintaining portion 30 and the second gap maintaining portion 40 may be greater than the thickness of the flange portion 22. Accordingly, the lens 20 and other lenses may be spaced apart in the optical axis direction by the gap maintaining portions 30 and 40.

Referring to FIG. 3, the first gap maintaining portion 30 may include a first step portion 31. The first step portion 31 may be formed along an inner peripheral surface of the first gap maintaining portion 30. The first step portion 31 may be formed to protrude from the inner peripheral surface of the first gap maintaining portion 30 in a direction perpendicular to the optical axis direction.

The first step portion 31 may be disposed to overlap the flange portion 22 in the optical axis direction. The first step portion 31 may contact one surface of the flange portion 22 in the optical axis direction. In an example, one surface of the flange portion 22 contacting the first step portion 31 may be an object-side surface. The first step portion 31 may cover the flange portion 22 in the optical axis direction, and through this structure, the light incident on the flange portion 22 may be prevented from being diffusely reflected inside the lens 20.

One surface of the first gap maintaining portion 30 may be in contact with the second gap maintaining portion 40. In an example, one surface of the first gap maintaining portion 30 may be an image side-surface of the first gap maintaining portion 30. Based on FIG. 3, the image side-surface of the first gap maintaining portion 30 may be referred to as an upper surface of the first gap maintaining portion 30.

A seating groove 32 may be formed in the upper surface of the first gap maintaining portion 30. The seating groove 32 may be formed to be concave from the upper surface of the first gap maintaining portion 30 in the optical axis direction. That is, the seating groove 32 may be formed to be concave from the upper surface of the first gap maintaining portion 30 to an object side, and a width of the seating groove 32 may narrow from the upper surface of the first gap maintaining portion 30 to the object side. The seating groove 32 may have a shape corresponding to a protrusion 42, which will be described later.

The second gap maintaining portion 40 may include a second step portion 41. The second step portion 41 may be formed along the inner peripheral surface of the second gap maintaining portion 40. The second step portion 41 may be formed to protrude from the inner peripheral surface of the second gap maintaining portion 40 in a direction perpendicular to the optical axis direction.

The second step portion 41 may be disposed to overlap the optical portion 21 in the optical axis direction. The second step portion 41 may face an image side-surface of the optical portion 21. In an example, the second step portion 41 may block a portion of an edge portion of the optical portion 21 in the optical axis direction, and through this structure, the second step portion 41 may prevent light from being diffusely reflected in the edge area of the optical portion 21.

One surface of the second gap maintaining portion 40 may be in contact with the first gap maintaining portion 30. In an example, one surface of the second gap maintaining portion 40 may be an object side-surface of the second gap maintaining portion 40. Based on FIG. 3, the object side-surface of the second gap maintaining portion 40 may be referred to as a lower surface of the second gap maintaining portion 40.

A protrusion 42 may be disposed on a lower surface of the second gap maintaining portion 40. The protrusion 42 may be formed to protrude from the lower surface of the second gap maintaining portion 40 in the optical axis direction. A width of the protrusion 42 may narrow from the image side to the object side, and a shape of the protrusion 42 may correspond to a shape of the seating groove 32. The protrusion 42 may be disposed in the seating groove 32.

Through the structure of the seating groove 32 of the first gap maintaining portion 30 and the protrusion 42 of the second gap maintaining portion 40, the first gap maintaining portion 30 and the second gap maintaining portion 40 may be aligned in the optical axis direction within the lens barrel 10.

Referring to FIG. 3, a structure of the protruding portion according to the first embodiment will be described.

A protruding portion 210 may be disposed on a side surface of the lens 20. Specifically, the protruding portion 210 may be disposed on the side surface of the flange portion 22 disposed on the lens 20. In other words, the side surface of the lens 20 may mean the same portion as the side surface of the flange portion 22.

The protruding portion 210 may protrude from the side surface of the lens 20 toward the inner peripheral surface of the lens barrel 10. In this example, the protruding portion 210 may be formed to protrude from the side surface of the lens 20 in a direction, perpendicular to the optical axis.

A cross-section of the protruding portion 210 may have a sharp end at an end distant from an optical axis. When the length measured in the optical axis direction based on the cross-section of the protruding portion 210 is defined as a width, the width of the cross-section of the protruding portion 210 may narrow as the distance from the optical axis increases.

The protruding portion 210 may have a symmetrical structure with respect to a line perpendicular to the optical axis. In an example, the line perpendicular to the optical axis may be a virtual line obtained by extending the optical axis and the end of the protruding portion 210.

The protruding portion 210 may include inclined surfaces 220 and 230. The inclined surfaces 220 and 230 may be disposed in plural. The plurality of inclined surfaces 220 and 230 may include a first inclined surface 220 and a second inclined surface 230.

The first inclined surface 220 may be an inclined surface disposed below the second inclined surface 230 as illustrated in FIG. 3. A distance of the first inclined surface 220 from the optical axis may increase from the object side to the image side.

The second inclined surface 230 may be an inclined surface disposed above the first inclined surface 220 as illustrated in FIG. 3. A distance of the second inclined surface 230 from the optical axis may decrease from the object side to the image side.

The first inclined surface 220 and the second inclined surface 230 may be connected to each other. Specifically, the first inclined surface 220 and the second inclined surface 230 may be connected to each other on a side distant from the optical portion 21 of the lens 20. A portion to which the first inclined surface 220 and the second inclined surface 230 are connected may be referred to as a corner portion of the protruding portion 210. An end of the corner portion 260 may be disposed at a boundary in which the first gap maintaining portion 30 and the second gap maintaining portion 40 contact in the optical axis direction.

The protruding portion 210 may be disposed in the groove 50 formed in the gap maintaining portions 30 and 40. That is, the gap maintaining portions 30 and 40 may include a groove 50 having a shape corresponding to a shape of the protruding portion 210. The groove 50 may be disposed between the first gap maintaining portion 30 and the second gap maintaining portion 40. When the first gap maintaining portion 30 and the second gap maintaining portion 40 are stacked, a groove 50 may be formed between the first gap maintaining portion 30 and the second gap maintaining portion 40.

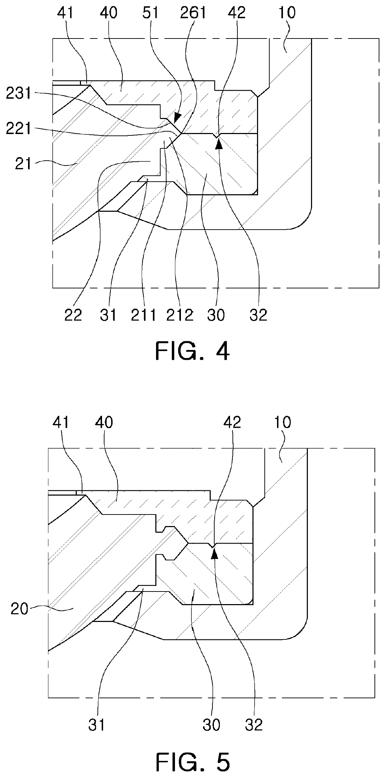

FIG. 4 illustrates portion A of FIG. 2 according to a second embodiment.

The protruding portion 210 may be a two-stage protruding portion. That is, the protruding portion may include a first protruding portion 211 directly protruding from a side surface of the flange portion, and a second protruding portion 212 directly protruding from the first protruding portion 211. That is, an optical portion 21, a flange portion 22, a first protruding portion 211, and a second protruding portion 212 may be sequentially disposed based on a direction perpendicular to the optical axis.

The first protruding portion 211 may protrude from the side surface of the flange portion 22 in the direction perpendicular to the optical axis. A width of a cross-section of the first protruding portion 211 may be constant. Lower and upper surfaces of the first protruding portion 211 may be parallel surfaces.

The second protruding portion 212 may protrude from a side surface of the first protruding portion 211 in the direction perpendicular to the optical axis. A width of a cross-section of the second protruding portion 212 may narrow as the distance from the optical axis increases.

The second protruding portion 212 may have a symmetrical structure with respect to a line perpendicular to the optical axis. In an example, the line perpendicular to the optical axis may be a virtual line obtained by extending the optical axis and an end of the second protruding portion 212.

The second protruding portion 212 may include a first inclined surface 221 and a second inclined surface 231.

The first inclined surface 221 may be an inclined surface disposed below the second inclined surface 231 as illustrated in FIG. 4. The first inclined surface 221 may be an inclined surface of which a distance from the optical axis increases from the object side to the image side.

The second inclined surface 231 may be an inclined surface disposed above the first inclined surface 221 as illustrated in FIG. 4. The second inclined surface 231 may be an inclined surface of which a distance from the optical axis decreases from the object side to the image side.

The first inclined surface 221 and the second inclined surface 231 may be connected to each other. Specifically, the first inclined surface 221 and the second inclined surface 231 may be connected to each other on a side distant from the optical portion 21 of the lens 20. A portion to which the first inclined surface 221 and the second inclined surface 231 are connected may be referred to as a corner portion 261 of the second protruding portion 212. The corner portion 261 may be disposed at a boundary at which the first gap maintaining portion 30 and the second gap maintaining portion 40 contact in the optical axis direction.

The first protruding portion 211 and the second protruding portion 212 may be disposed in a groove 51 formed in the gap maintaining portions 30 and 40. That is, the gap maintaining portion may have a groove 51 of a shape corresponding to a shape of the first protruding portion 211 and the second protruding portion 212. The groove 51 may be formed between the first gap maintaining portion 30 and the second gap maintaining portion 40. When the first gap maintaining portion 30 and the second gap maintaining portion 40 are stacked, a groove 51 may be formed between the first gap maintaining portion 30 and the second gap maintaining portion 40.

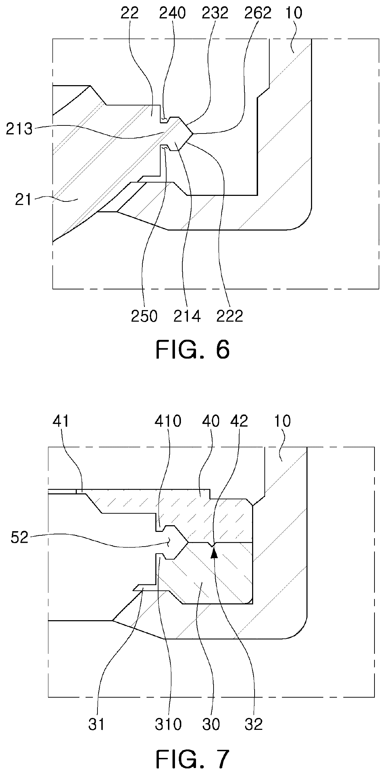

FIG. 5 illustrates A in FIG. 2 according to a third embodiment, FIG. 6 illustrates FIG. 5 excluding a gap maintaining portion, and FIG. 7 illustrates FIG. 5 excluding a lens.

Referring to FIGS. 5, 6, and 7, the protruding portion may be a two-stage protruding portion. That is, the protruding portion may include a first protruding portion 213 directly protruding from a side surface of the flange portion, 22 and a second protruding portion 214 directly protruding from the first protruding portion 213. That is, an optical portion 21, a flange portion 22, a first protruding portion 213, and a second protruding portion 214 may be sequentially disposed based on a direction perpendicular to the optical axis.

The first protruding portion 213 may protrude from the side surface of the flange portion 22 in the direction perpendicular to the optical axis. A width of a cross-section of the first protruding portion 213 may be constant. Lower and upper surfaces of the first protruding portion 213 may be parallel surfaces.

The second protruding portion 214 may protrude from a side surface of the first protruding portion 213 in the direction perpendicular to the optical axis. A width of a cross-section of the second protruding portion 214 may narrow as the distance from the optical axis increases. Additionally, the widest width of the second protruding portion 214 may be wider than the width of the first protruding portion 213.

Upper and lower surfaces of the second protruding portion 214 may be parallel surfaces. A distance between the upper and lower surfaces of the second protruding portion 214 may be greater than a distance between the upper and lower surfaces of the first protruding portion 213.

A recessed groove may be disposed between the side surface of the flange portion 22 and the second protruding portion 214. The recessed groove may include a first recessed groove 250 and a second recessed groove 240. Referring to FIG. 5, the first recessed groove 250 may be disposed in the lower portion, and the second recessed groove 240 may be disposed in the upper portion. The first recessed groove 250 may be formed to be concave from an object side to an image side, and the second recessed groove 240 may be formed to be concave from the image side to the object side. The first recessed groove 250 and the second recessed groove 240 may be disposed symmetrically with respect to a line perpendicular to the optical axis.

The second protruding portion 214 may include a first inclined surface 222 and a second inclined surface 232.

The first inclined surface 222 may be an inclined surface disposed below the second inclined surface 232 as illustrated in FIG. 6. The first inclined surface 222 may be an inclined surface of which a distance from an optical axis increases from an object side to an image side.

The second inclined surface 232 may be an inclined surface disposed above the first inclined surface 222 as illustrated in FIG. 5. The second inclined surface 232 may be an inclined surface of which a distance from an optical axis decreases from the object side to the image side.

The first inclination surface 222 and the second inclination surface 232 may be connected to each other. Specifically, the first inclined surface 222 and the second inclined surface 232 may be connected to each other on a side distant from the optical portion 21 of the lens 20. A portion to which the first inclined surface 222 and the second inclined surface 232 are connected may be referred to as a corner portion 262 of the protruding portion. The corner portion 262 may be disposed at a boundary at which the first gap maintaining portion 30 and the second gap maintaining portion 40 contact in the optical axis direction.

The first protruding portion 213 and the second protruding portion 214 may be disposed in a groove 52 formed by the first gap maintaining portion 30 and the second gap maintaining portion 40. A shape of the groove 52 may correspond to the shape of the first protruding portion 213 and the second protruding portion 214. The groove 52 may be formed between the first gap maintaining portion 30 and the second gap maintaining portion 40. When the first gap maintaining portion 30 and the second gap maintaining portion 40 are stacked, a groove 52 may be formed between the first gap maintaining portion 30 and the second gap maintaining portion 40.

A step portion may be disposed in the groove 52 formed in the first gap maintaining portion 30 and the second gap maintaining portion 40. A first step portion 310 may be disposed on the first gap maintaining portion 30. The first step portion 310 may protrude from an object side to an image side. The first step portion 310 may be disposed in a first recessed groove 250. The first step portion 310 may have a shape corresponding to the first recessed groove 250. A second step portion 410 may be disposed on the second gap maintaining portion 40. The second step portion 410 may protrude from the image side to the object side. The second step portion 410 may be disposed in a second recessed groove 240. The second step portion 410 may have a shape corresponding to the second recessed groove 240.

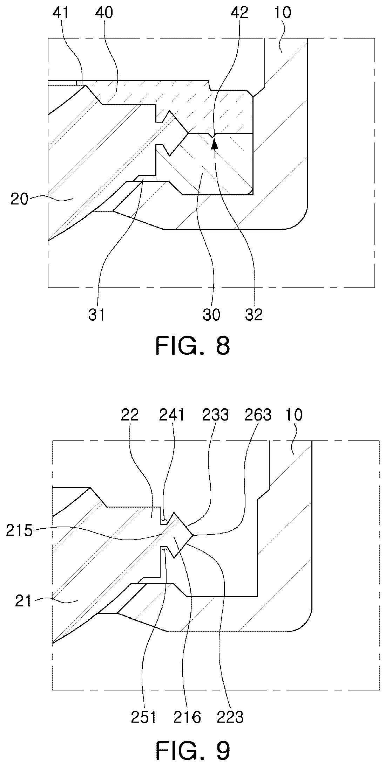

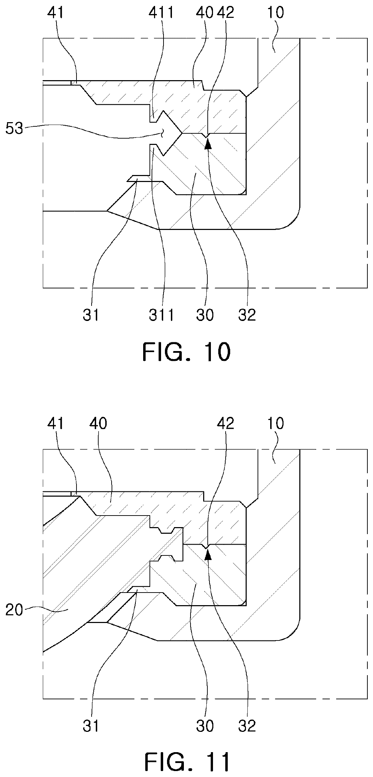

FIG. 8 illustrates A in FIG. 2 according to a fourth embodiment, FIG. 9 illustrates FIG. 8 excluding a gap maintaining portion, and FIG. 10 illustrates FIG. 8 excluding a lens.

The protruding portion may be a two-stage protruding portion. That is, the protruding portion may include a first protruding portion 215 directly protruding from a side surface of the flange portion, 22 and a second protruding portion 216 directly protruding from the first protruding portion 215. That is, an optical portion 21, a flange portion 22, a first protruding portion 215, and a second protruding portion 216 may be sequentially disposed based on a direction perpendicular to the optical axis.

The first protruding portion 215 may protrude from the side surface of the flange portion 22 in the direction perpendicular to the optical axis. A width of a cross-section of the first protruding portion 215 may be constant. Lower surfaces and upper surfaces of the first protruding portion 215 may be parallel surfaces.

A recessed groove may be disposed between the side surface of the flange portion 22 and the second protruding portion 216. The recessed groove may include a first recessed groove 251 and a second recessed groove 241.

Referring to FIG. 9, the first recessed groove 251 may be disposed in a lower portion, and the second recessed groove 241 may be disposed in an upper portion. The first recessed groove 251 may be formed to be concave from an object side to an image side, and the second recessed groove 241 may be formed to be concave from the image side to the object side. The first recessed groove 251 and the second recessed groove 241 may be disposed symmetrically with respect to a line perpendicular to the optical axis.

The second protruding portion 216 may include a first inclined surface 223 and a second inclined surface 233.

The first inclined surface 223 may be an inclined surface disposed below the second inclined surface 233 as illustrated in FIG. 9. The first inclined surface 223 may be an inclined surface of which a distance from the optical axis increases from the object side to the image side.

The second inclined surface 233 may be an inclined surface disposed above the first inclined surface 223 as illustrated in FIG. 9. The second inclined surface 233 may be an inclined surface of which a distance from the optical axis decreases from the object side to the image side.

The first inclined surface 223 and the second inclined surface 233 may be connected to each other. Specifically, the first inclined surface 223 and the second inclined surface 233 may be connected to each other on a side distant from the optical portion 21 of the lens 20. A portion to which the first inclined surface 223 and the second inclined surface 233 are connected may be referred to as a corner portion 263 of the protruding portion. The corner portion 263 may be disposed at a boundary at which the first gap maintaining portion 30 and the second gap maintaining portion 40 contact in the optical axis direction.

Referring to FIGS. 9 and 10. the first protruding portion 215 and the second protruding portion 216 may be disposed in a groove 53 formed in the gap maintaining portion. That is, a groove 53 having a shape corresponding to shapes of the first protruding portion 215 and the second protruding portion 216 may be disposed in the gap maintaining portion. When the first gap maintaining portion 30 and the second gap maintaining portion 40 are stacked, a groove 53 may be formed between the first gap maintaining portion 30 and the second gap maintaining portion 40.

A step portion may be disposed in the groove 53 formed in the gap maintaining portion. A first step portion 311 may be disposed on the first gap maintaining portion 30. The first step portion 311 may protrude from an object side to an image side. The first step portion 311 may be disposed in a first recessed groove 251. The first step portion 311 may have a shape corresponding to the first recessed groove 251. A second step portion 411 may be disposed in a second gap maintaining portion 40. The second step portion 411 may protrude from the image side to the object side. The second step portion 411 may be disposed in a second recessed groove 241. The second step portion 411 may have a shape corresponding to the second recessed groove 241.

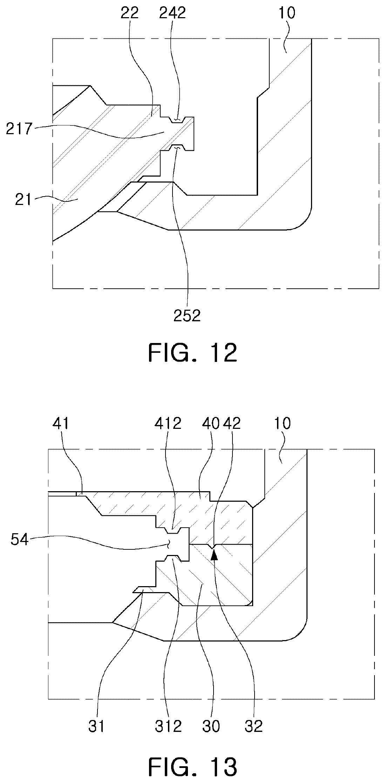

FIG. 11 illustrates A in FIG. 2 according to a fifth embodiment, FIG. 12 illustrates FIG. 11 excluding the gap maintaining portion, and FIG. 13 illustrates FIG. 11 excluding the lens.

A protruding portion may protrude directly from a side surface of the flange portion 22. The protruding portion may protrude from the side surface of the flange portion 22 in a direction perpendicular to an optical axis.

A recessed groove may be disposed on the protruding portion. The recessed groove may include a first recessed groove 252 and a second recessed groove 242. With reference to FIG. 12, the first recessed groove 252 may be disposed in the lower portion, and the second recessed groove 242 may be disposed in the upper portion. The first recessed groove 252 may be formed to be concave from an object side to an image side, and the second recessed groove 242 may be formed to be concave from the image side to the object side. The first recessed groove 252 and the second recessed groove 242 may be disposed symmetrically with respect to a line perpendicular to the optical axis.

The protruding portion may be disposed in a groove 54 formed in the gap maintaining portion. That is, a groove having a shape corresponding to the protruding portion. When the first gap maintaining portion 30 and the second gap maintaining portion 40 are stacked, a groove 54 may be formed between the first gap maintaining portion 30 and the second gap maintaining portion 40.

A step portion may be disposed in the groove 54 formed in the gap maintaining portion. A first step portion 312 may be disposed on a first gap maintaining portion 30. The first step portion 312 may protrude from an object side to an image side. The first step portion 312 may be disposed in the first recessed groove 252. The first step portion 312 may have a shape corresponding to the first recessed groove 252. A second step portion 412 may be disposed in the second gap maintaining portion 40. The second step portion 412 may protrude from the image side to the object side. The second step portion 412 may be disposed in the second recessed groove 242. The second step portion 412 may have a shape corresponding to the second recessed groove 242.

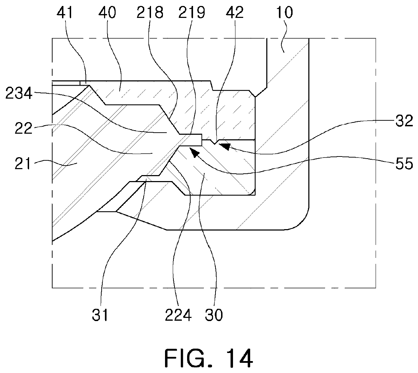

FIG. 14 illustrates portion A of FIG. 2 according to a sixth embodiment.

The protruding portion may be a two-stage protruding portion. That is, the protruding portion may include a first protruding portion 218 directly protruding from a side surface of the flange portion, and a second protruding portion 219 directly protruding from the first protruding portion 218. That is, an optical portion 21, a flange portion 22, a first protruding portion 218, and a second protruding portion 219 may be sequentially disposed based on a direction perpendicular to the optical axis.

The first protruding portion 218 may protrude from the side surface of the flange portion 22 in the direction perpendicular to the optical axis. A width of a cross-section of the first protruding portion 218 may narrow as the distance from the optical axis increases. The first protruding portion 218 may include a first inclined surface 224 and a second inclined surface 234.

The first inclined surface 224 may be an inclined surface disposed below the second inclined surface 234 as illustrated in FIG. 14. The first inclined surface 224 may be an inclined surface of which a distance from the optical axis increases from the object side to the image side.

The second inclined surface 234 may be an inclined surface disposed above the first inclined surface 224 as illustrated in FIG. 14. The second inclined surface 234 may be an inclined surface of which a distance from the optical axis decreases from the object side to the image side.

The second protruding portion 219 may protrude from a side surface of the first protruding portion 218 in a direction perpendicular to the optical axis. A width of a cross-section of the second protruding portion 219 may be constant. That is, the upper and lower surfaces of the second protruding portion 219 may be parallel to each other.

The first protruding portion 218 and the second protruding portion 219 may be disposed in a groove formed in the gap maintaining portion. That is, the gap maintaining portion may have a groove 55 of a shape corresponding to shapes of the first protruding portion 218 and the second protruding portion 219. The groove 55 may be formed between the first gap maintaining portion 30 and the second gap maintaining portion 40. The first gap maintaining portion 30 and the second gap maintaining portion 40 may be stacked to form a groove 55 between the first gap maintaining portion 30 and the second gap maintaining portion 40.

In the example lens module, there is an effect of preventing flare by shortening a flange portion of the lens and disposing a gap maintaining portion formed of an opaque material between a side surface of the lens and an inner surface of the lens barrel. Additionally, since a groove in which the protruding portion on the side surface of the lens is disposed is formed in the gap maintaining portion, there is an advantage in that it facilitates alignment of the gap maintaining portion and the lens.

As set forth above, according to the one or more examples, flare occurring in a lens module may be reduced, and assembly of the lens module may be facilitated.

While this disclosure includes specific examples, it will be apparent after an understanding of the disclosure of this application that various changes in form and details may be made in these examples without departing from the scope of the claims.

The examples described herein are to be considered in a descriptive sense only, and not for purposes of limitation. Descriptions of features or aspects in each example are to be considered as being applicable to similar features or aspects in other examples. Suitable results may be achieved if the described techniques are performed in a different order, and/or if components in a described system, architecture, device, or circuit are combined in a different manner, and/or replaced or supplemented by other components or their equivalents.

## Claims

1. A lens module, comprising:
a lens barrel (10);
a lens (20) disposed within the lens barrel; and
a gap maintaining portion (30) disposed within the lens barrel, and further disposed between a side surface of the lens and an inner peripheral surface of the lens barrel,
wherein a protruding portion (210), that protrudes toward the inner peripheral surface of the lens barrel, is disposed on the side surface of the lens,
wherein a groove (50) in which the protruding portion is disposed is formed in the gap maintaining portion,
**characterized in that** the protruding portion comprises an inclined surface (220) of which a distance from an optical axis increases from an object side to an image side, and
wherein the inclined surface (220) is surrounded by the gap maintaining portion (30).

2. The lens module of claim 1, wherein the groove has a shape that corresponds to a shape of the protruding portion.

3. The lens module of claim 1, wherein the gap maintaining portion comprises:
a first gap maintaining portion; and
a second gap maintaining portion disposed above the first gap maintaining portion,
wherein the groove is disposed between the first gap maintaining portion and the second gap maintaining portion.

4. The lens module of claim 1, wherein the protruding portion comprises a first inclined surface of which a distance from an optical axis increases from an object side to an image side; and
a second inclined surface of which a distance from the optical axis decreases from the object side to the image side,
wherein the first inclined surface and the second inclined surface are connected on a side extending from the optical axis.

5. The lens module of claim 3, wherein a width of a cross-section of the protruding portion parallel to an optical axis narrows as a distance from the optical axis increases.

6. The lens module of claim 3, wherein the protruding portion comprises:
a first inclined surface in contact with the first gap maintaining portion; and
a second inclined surface in contact with the second gap maintaining portion,
wherein the first inclined surface and the second inclined surface are connected to each other.

7. The lens module of claim 3, wherein the protruding portion comprises:
a first protruding portion that extends directly from the side surface of the lens; and
a second protruding portion that extends directly from the first protruding portion,
wherein a cross-section of the second protruding portion has a width parallel to an optical axis which narrows as a distance from the optical axis increases.

8. The lens module of claim 3, wherein the protruding portion is formed with a recessed groove that is formed to be concave from an object side to an image side, and
the first gap maintaining portion comprises a step portion disposed in the recessed groove.

9. The lens module of claim 3, wherein the protruding portion comprises a first recessed groove that is formed to be concave from an object side to an image side, and
a second recessed groove that is formed to be concave from the image side to the object side,
wherein the first gap maintaining portion comprises:
a first step portion disposed in the first recessed groove; and
a second step portion disposed in the second recessed groove.

10. The lens module of claim 3, wherein the protruding portion comprises:
a first protruding portion that extends directly from the side surface of the lens; and
a second protruding portion that extends directly from the first protruding portion,
wherein a cross-section of the first protruding portion has a width, parallel to an optical axis, that narrows as a distance from the optical axis increases.

11. A lens module, comprising:
a lens barrel (10);
a lens (20) disposed within the lens barrel;
a first gap maintaining portion (30) and a second gap maintaining portion (40) disposed within the lens barrel and stacked in an optical axis direction,
**characterized in that** a side surface of the lens is in contact with an inner surface of the first gap maintaining portion (30) and an inner surface of the second gap maintaining portion (40).

12. The lens module of claim 11, wherein the lens comprises an optical portion and a flange portion disposed at an edge of the optical portion,
wherein the first gap maintaining portion comprises a first step portion that protrudes in a direction perpendicular to the optical axis direction from inside of the first gap maintaining portion, and
wherein the flange portion and the first step portion overlap in the optical axis direction.

13. The lens module of claim 11, wherein the second gap maintaining portion comprises a second step portion that protrudes from inside of the second gap maintaining portion in a direction perpendicular to the optical axis direction, and
wherein the second step portion overlaps the lens in the optical axis direction.

14. The lens module of claim 11 wherein a seating groove formed to be concave in the optical axis direction is disposed on an upper surface of the first gap maintaining portion, and
the second gap maintaining portion comprises a protruding portion disposed in the seating groove.

## Patentansprüche

1. Objektivmodul, umfassend:
einen Objektivtubus (10);
ein im Objektivtubus angeordnetes Objektiv (20); und
einen Spalthalteabschnitt (30), der im Objektivtubus angeordnet ist und ferner zwischen einer Seitenfläche des Objektivs und einer inneren Umfangsfläche des Objektivtubus angeordnet ist, wobei ein vorstehender Abschnitt (210), der in Richtung der inneren Umfangsfläche des Objektivtubus vorsteht, auf der Seitenfläche des Objektivs angeordnet ist,
wobei eine Nut (50), in welcher der vorstehende Abschnitt angeordnet ist, im Spalthalteabschnitt gebildet ist,
**dadurch gekennzeichnet, dass** der vorstehende Abschnitt eine schräge Fläche (220) umfasst, von der ein Abstand zu einer optischen Achse von einer Objektseite zu einer Bildseite hin zunimmt, und
wobei die schräge Fläche (220) vom Spalthalteabschnitt (30) umgeben ist.

2. Objektivmodul nach Anspruch 1, wobei die Nut eine Form aufweist, die einer Form des vorstehenden Abschnitts entspricht.

3. Objektivmodul nach Anspruch 1, wobei der Spalthalteabschnitt umfasst: einen ersten Spalthalteabschnitt; und
einen zweiten Spalthalteabschnitt, der oberhalb des ersten Spalthalteabschnitts angeordnet ist, wobei die Nut zwischen dem ersten Spalthalteabschnitt und dem zweiten Spalthalteabschnitt angeordnet ist.

4. Objektivmodul nach Anspruch 1, wobei der vorstehende Abschnitt eine erste schräge Fläche umfasst, von der ein Abstand von einer optischen Achse von einer Objektseite zu einer Bildseite hin zunimmt; und
eine zweite schräge Fläche umfasst, von der ein Abstand zur optischen Achse von der Objektseite zur Bildseite hin abnimmt,
wobei die erste schräge Fläche und die zweite schräge Fläche an einer Seite verbunden sind, die sich von der optischen Achse aus erstreckt.

5. Objektivmodul nach Anspruch 3, wobei sich eine Breite eines Querschnitts des vorstehenden Abschnitts parallel zu einer optischen Achse mit zunehmendem Abstand von der optischen Achse verjüngt.

6. Objektivmodul nach Anspruch 3, wobei der vorstehende Abschnitt umfasst:
eine erste schräge Fläche in Kontakt mit dem ersten Spalthalteabschnitt; und
eine zweite schräge Fläche in Kontakt mit dem zweiten Spalthalteabschnitt,
wobei die erste schräge Fläche und die zweite schräge Fläche miteinander verbunden sind.

7. Objektivmodul nach Anspruch 3, wobei der vorstehende Abschnitt umfasst:
einen ersten vorstehenden Abschnitt, der sich direkt von der Seitenfläche des Objektivs aus erstreckt; und
einen zweiten vorstehenden Abschnitt, der sich direkt vom ersten Abschnitt aus erstreckt,
wobei ein Querschnitt des zweiten vorstehenden Abschnitts eine Breite parallel zur optischen Achse aufweist, die sich mit zunehmendem Abstand von der optischen Achse verjüngt.

8. Objektivmodul nach Anspruch 3, wobei der vorstehende Abschnitt mit einer vertieften Nut gebildet ist, die von einer Objektseite einer Bildseite hin konkav gebildet ist, und
der erste Spalthalteabschnitt einen Stufenabschnitt umfasst, der in der vertieften Nut angeordnet ist.

9. Objektivmodul nach Anspruch 3, wobei der vorstehende Abschnitt eine erste vertiefte Nut umfasst, die von einer Objektseite zu einer Bildseite hin konkav gebildet ist, und
eine zweite vertiefte Nut, die von der Bildseite zur Objektseite hin konkav gebildet ist,
wobei der erste Spalthalteabschnitt umfasst:
einen ersten Stufenabschnitt, der in der ersten vertieften Nut angeordnet ist; und
einen zweiten Stufenabschnitt, der in der zweiten vertieften Nut angeordnet ist.

10. Objektivmodul nach Anspruch 3, wobei der vorstehende Abschnitt umfasst:
einen ersten vorstehenden Abschnitt, der sich direkt von der Seitenfläche des Objektivs aus erstreckt; und einen zweiten vorstehenden Abschnitt, der sich direkt vom ersten Abschnitt aus erstreckt, wobei ein Querschnitt des ersten vorstehenden Abschnitts eine Breite parallel zur optischen Achse aufweist, die sich mit zunehmendem Abstand von der optischen Achse verjüngt.

11. Objektivmodul, umfassend:
einen Objektivtubus (10);
ein im Objektivtubus angeordnetes Objektiv 20;
einen ersten Spalthalteabschnitt (30) und einen zweiten Spalthalteabschnitt (40), die im Objektivtubus angeordnet und in einer Richtung der optischen Achse gestapelt sind,
**dadurch gekennzeichnet, dass** eine Seitenfläche des Objektivs in Kontakt mit einer Innenfläche des ersten Spalthalteabschnitts (30) und einer Innenfläche des zweiten Spalthalteabschnitts (40) ist.

12. Objektivmodul nach Anspruch 11, wobei das Objektiv einen optischen Abschnitt und einen Flanschabschnitt, angeordnet an einer Kante des optischen Abschnitts, umfasst,
wobei der erste Spalthalteabschnitt einen ersten Stufenabschnitt umfasst, der in einer Richtung senkrecht zur Richtung der optischen Achse von der Innenseite des ersten Spalthalteabschnitts vorsteht, und
wobei der Flanschabschnitt und der erste Stufenabschnitt in Richtung der optischen Achse überlappen.

13. Objektivmodul nach Anspruch 11, wobei der zweite Spalthalteabschnitt einen zweiten Stufenabschnitt umfasst, der von der Innenseite des zweiten Spalthalteabschnitts in einer Richtung senkrecht zur Richtung der optischen Achse vorsteht, und
wobei der zweite Stufenabschnitt mit dem Objektiv in Richtung der optischen Achse überlappt.

14. Objektivmodul nach Anspruch 11, wobei eine in der Richtung der optischen Achse gebildete Sitznut auf einer oberen Fläche des ersten Spalthalteabschnitts angeordnet ist, und
der zweite Spalthalteabschnitt einen vorstehenden Abschnitt umfasst, der in der Sitznut angeordnet ist.

## Revendications

1. Module de lentille, comprenant:
un barillet de lentille (10);
une lentille (20) disposée à l'intérieur du barillet de lentille; et
une partie mainteneur d'espace (30) disposée à l'intérieur du barillet de lentille, et disposée en outre entre une surface latérale de la lentille et une surface périphérique interne du barillet de lentille, dans lequel une partie en saillie (210), qui fait saillie vers la surface périphérique interne du barillet de lentille, est disposée sur la surface latérale de la lentille, dans lequel une rainure (50) dans laquelle est disposée la partie en saillie est formée dans la partie mainteneur d'espace,
**caractérisé en ce que** la partie en saillie comprend une surface inclinée (220) dont la distance par rapport à un axe optique augmente du côté objet vers le côté image, et dans lequel la surface inclinée (220) est entourée par la partie mainteneur d'espace (30).

2. Module de lentille selon la revendication 1, dans lequel la rainure présente une forme qui correspond à la forme de la partie en saillie.

3. Module de lentille selon la revendication 1, dans lequel la partie mainteneur d'espace comprend:
une première partie mainteneur d'espace; et
une seconde partie mainteneur d'espace disposée au-dessus de la première partie mainteneur d'espace, la rainure étant disposée entre la première partie mainteneur d'espace et la seconde partie mainteneur d'espace.

4. Module de lentille selon la revendication 1, dans lequel la partie en saillie comprend une première surface inclinée dont la distance par rapport à un axe optique augmente du côté objet vers le côté image; et
une seconde surface inclinée dont la distance par rapport à l'axe optique diminue du côté objet vers le côté image,
dans lequel la première surface inclinée et la seconde surface inclinée sont reliées sur un côté s'étendant à partir de l'axe optique.

5. Module de lentille selon la revendication 3, dans lequel la largeur d'une section transversale de la partie en saillie parallèle à un axe optique se rétrécit à mesure que la distance par rapport à l'axe optique augmente.

6. Module de lentille selon la revendication 3, dans lequel la partie en saillie comprend:
une première surface inclinée en contact avec la première partie mainteneur d'espace; et
une seconde surface inclinée en contact avec la seconde partie mainteneur d'espace,
dans lequel la première surface inclinée et la seconde surface inclinée sont reliées l'une à l'autre.

7. Module de lentille selon la revendication 3, dans lequel la partie en saillie comprend:
une première partie en saillie qui s'étend directement depuis la surface latérale de la lentille; et
une seconde partie en saillie qui s'étend directement à partir de la première partie en saillie,
dans lequel une section transversale de la seconde partie en saillie présente une largeur parallèle à un axe optique qui se rétrécit à mesure que la distance par rapport à l'axe optique augmente.

8. Module de lentille selon la revendication 3, dans lequel la partie en saillie est pourvue d'une rainure en retrait qui est formée de manière à être concave du côté de l'objet vers le côté de l'image, et
la première partie mainteneur d'espace comprend une partie en gradin disposée dans la rainure en creux.

9. Module de lentille selon la revendication 3, dans lequel la partie en saillie comprend une première rainure en creux formée de manière à être concave du côté objet vers le côté image, et
une seconde rainure en creux formée de manière à être concave du côté de l'image vers le côté de l'objet,
dans lequel la première partie mainteneur d'espace comprend:
une première partie en gradin disposée dans la première rainure en creux ; et
une seconde partie en gradin disposée dans la seconde rainure en creux.

10. Module de lentille selon la revendication 3, dans lequel la partie en saillie comprend: une première partie en saillie qui s'étend directement depuis la surface latérale de la lentille; et une seconde partie en saillie qui s'étend directement depuis la première partie en saillie, dans lequel une section transversale de la première partie en saillie présente une largeur, parallèle à un axe optique, qui se rétrécit à mesure que la distance par rapport à l'axe optique augmente.

11. Module de lentille, comprenant:
un barillet de lentille (10);
une lentille (20) disposée à l'intérieur du barillet de lentille;
une première partie mainteneur d'espace (30) et une seconde partie mainteneur d'espace (40) disposées à l'intérieur du barillet de lentille et empilées dans la direction de l'axe optique,
**caractérisé en ce qu'**une surface latérale de la lentille est en contact avec une surface intérieure de la première partie mainteneur d'espace (30) et une surface intérieure de la seconde partie mainteneur d'espace (40).

12. Module de lentille selon la revendication 11, dans lequel l'objectif comprend une partie optique et une partie bride disposée au niveau d'un bord de la partie optique, dans lequel la première partie de maintien d'espace comprend une première partie en gradin qui fait saillie dans une direction perpendiculaire à la direction de l'axe optique depuis l'intérieur de la première partie de maintien d'espace, et
dans lequel la partie bride et la première partie en gradin se chevauchent dans la direction de l'axe optique.

13. Module de lentille selon la revendication 11, dans lequel la seconde partie mainteneur d'espace comprend une seconde partie en gradin qui fait saillie depuis l'intérieur de la seconde partie mainteneur d'espace dans une direction perpendiculaire à la direction de l'axe optique, et dans lequel la seconde partie en gradin chevauche la lentille dans la direction de l'axe optique.

14. Module de lentille selon la revendication 11, dans lequel une rainure de logement formée de manière à être concave dans la direction de l'axe optique est disposée sur une surface supérieure de la première partie mainteneur d'espace, et
la seconde partie mainteneur d'espace comprend une partie en saillie disposée dans la rainure de logement.
